# EUROPÄISCHE PATENTSCHRIFT

(11) **EP 0 702 896 B1**
(45) Veröffentlichungstag und Bekanntmachung des Hinweises auf die Patenterteilung: **28.11.2001**
(21) Anmeldenummer: 95113520.1
(22) Anmeldetag: 29.08.1995
(51) Int. Cl.: A01N 25/04

(54) **Thixotrope wässrige Pflanzenschutzmittel-Suspension**
Aqueuou thixotropic suspension of plant protection products
Suspension aqueuse thixotropique de produits phytosanitaires

(30) Priorität: 21.09.1994 DE 4433653
(43) Veröffentlichungstag der Anmeldung: 27.03.1996
(73) Patentinhaber: Aventis CropScience GmbH, 65929 Frankfurt am Main (DE)
(72) Erfinder: Frisch, Gerhard, Dr., D-61273 Wehrheim (DE); Maier, Thomas, Dr., D-65719 Hofheim (DE)

(56) Entgegenhaltungen:
- EP-A- 0 022 925
- EP-A- 0 028 052
- EP-A- 0 110 174
- EP-A- 0 425 729
- CHEMICAL PATENTS INDEX, DOCUMENTATION ABSTRACTS JOURNAL Week 9343 5.Januar 1994 Derwent Publications Ltd., London, GB; AN 93-339958 & JP-A-05 247 435 (NIPPON SILICA KOGYO KK) , 24.September 1993
- CHEMICAL PATENTS INDEX, DOCUMENTATION ABSTRACTS JOURNAL Week 9348 9.Februar 1994 Derwent Publications Ltd., London, GB; AN 93-382964 & JP-A-05 286 804 (TAKEDA CHEM. IND. LTD.) , 2.November 1993
- MARK, OTHMER ET AL. 'Kirk-Othmer Encyclopedia of Chemical Technology, Third Edition ' 1978 , WILEY & SONS , NEW YORK, US; Band 6, Stichwort "Clays", Kapitel "Survey", Seiten 190-206 * Abschnitt "Smectites (Montmorillonites)", Seite 197, letzter Absatz - Seite 200, Absatz 3 *

## Beschreibung

Die Erfindung betrifft thixotrope wäßrige Suspensionskonzentrate von Pflanzenschutzmitteln, die einen Saponit enthalten, worin die Partikel in Teilchengrössen von 0.01 bis unter 5 µm vorliegen.

Bekanntlich lassen sich feste Pflanzenschutzwirkstoffe in Form wäßriger Suspensionen formulieren. Dabei ist es von Vorteil, aber nicht essentiell, wenn die entsprechenden Wirkstoffe einen Schmelzpunkt über 70 °C und eine Wasserlöslichkeit bei Raumtempertur von ≤ 100 ppm haben. Die Herstellung erfolgt in bekannter Form, z. B. durch Naßvermahlung einer Mischung aus Wasser, Tensiden, Wirkstoffen und weiteren Hilfsmitteln beispielsweise in einer Reibkugelmühle. Man erhält auf diese Weise feinvermahlene Suspensionen von schwacher bis mittlerer Viskosität, deren Teilchengröße normalerweise im Partikelbereich von ≤ 10 *µ*m bei 90 % aller Teilchen liegen. Zur Verhinderung vor allem der Sedimentation der dispergierten Partikel, die in der Regel eine Dichte haben, die größer ist als die der Trägerphase (einschließlich der gelösten Anteile), kann man Verdickungsmittel organischer und/oder anorganischer Art zusetzen, um die Viskosität der flüssigen Phase zu erhöhen und damit die Sedimentation der feinvermahlenen Partikel zu reduzieren (EP-A-134 462). Ideal wäre ein leicht thixotropes Verhalten der wäßrigen Suspension.

Von großer Bedeutung bei der Herstellung von wäßrigen Dispersionen von Festkörpern ist das Raum/Zeit Verhältnis bei der Naßvermahlung. Aus verschiedenen Gründen heraus ist man daran interessiert, in möglichst kurzer Zeit viel durchsetzen zu können, ohne dabei an Qualität zu verlieren, d.h. insbesondere eine gleiche Partikelverteilung zu erzielen, ohne zusätzliche Wärmetönung, ohne Kristallwachstum und ohne Agglomeration.

Überraschenderweise wurde nun gefunden, daß man bekannte wäßrige Pflanzenschutzmittel-Suspensionen wie z. B. Suspensionen von Linuron, Carbendazim und Isoproturon und dergleichen (vgl. EP-A-110 174, EP-A-514 768, EP-A-592 880) durch Zusatz eines Saponites synthetischer und/oder natürlicher Art, und worin die Partikel in Teilchengrössen von 0.01 bis unter 5 µm vorliegen, so thixotropieren kann, daß im Ruhezustand der wäßrigen Suspension das Sedimentationsverhalten gegen null geht, bei leichter Bewegung bzw. Erschütterung jedoch diese Suspension sich leicht verflüssigt und gut fließfähig ist.

EP-A-425729, JP-A-1283201, JP-A-5286804 und JP-A-5247435 offenbaren Formulierungen von Wirkstoffen in wässrigen Suspensions-Konzentraten mit Saponit als Verdickungsmittel. EP-A-28052 offenbart ähnliche Formulierungen, und erwähnt, daß diese thixotrop sein könnten. In EP-A-28052 ist die durchschnittliche Partikelgrösse von ca. 5 bis ca.15 µm.

Es ist weiterhin überraschend, daß sich durch den Saponit-Zusatz die Mahlzeiten drastisch herabsetzen lassen und daß das so auf schonende Weise erhaltene Suspensionskonzentrat die gewünschten physikalisch-chemischen Daten aufweist und damit die an Suspensionskonzentrate gestellten Qualitätanforderungen erfüllt. Damit kann die nachträgliche Einarbeitung der bisher benutzten organischen und/oder anorganischen Verdickungsmittel entfallen.

Die Erfindung betrifft daher flüssige Pflanzenschutzmittel in Form wäßriger Suspensionskonzentrate, welche neben dem Wirkstoff oder Wirkstoffgemisch einen Saponit enthalten.

Das Suspensionskonzentrat enthält vorzugsweise 1 - 70 Gew.-%, insbesondere 5 bis 50 Gew.-% eines Wirkstoffs oder Wirkstoffgemisches, welche vorzugsweise aus der Gruppe der Insektizide, Lockstoffe, Sterilantien, Akarizide, Nematizide, Fungizide, wachstumsregulierenden Stoffe oder Herbizide ausgewählt werden. Es ist mitunter vorteilhaft, wenn der Wirkstoff oder das Wirkstoffgemisch einen Schmelzpunkt von über 70 °C und eine geringe Wasserlöslichkeit, vorzugsweise bei Raumtemperatur eine Wasserlöslichkeit von ≤ 100 ppm aufweisen.

Als Wirkstoffe für die erfindungsgemäßen Mittel kommen beispielsweise in Betracht Insektizide, wie Endosulfan oder Deltamethrin, Fungizide wie Captafol, Captan, Dimethomorph, Chlorthalonil, Propamocarb, Pyrimethanil, Triphenylzinnverbindungen, insbesondere Fentinhydroxid, sowie Carbendazim, Maneb oder Mancozeb oder Herbizide wie z.B. vom Typ der Harnstoffderivate wie Amidosulfuron, Diuron, Linuron, Monolinuron, Monuron, Isoproturon, Chlortoluron insbesondere Amidosulfuron, Diuron und Chlortoluron bzw. Gemische derselben oder Triazinderivate wie Simazin, Cyanazin, Atrazin, Metamitron oder Biscarbamate wie Phenmedipham, Desmedipham oder Methansulfonate wie Ethofumesat.

Der Gehalt an Saponit beträgt vorzugsweise 0,01 - 6 Gew.-%, insbesondere 0,1 - 3 Gew.-%. Saponite sind zu den trioktaedrischen Smektiten gehörende, quellfähige monokline Tonmineralien. Bei den erfindungsgemäß infragekommenden Saponiten synthetischer oder natürlicher Art handelt es sich um Magnesium-Aluminium-Silikate der allgemeinen Formel

[Mgₓ(Si_{y}Al_{z})Oₐ(OH)_{b}]Na_{c}(H₂O)_{d}

mit: x = 2 - 4, vorzugsweise 3; y = 2 - 4, vorzugsweise 3; z = 0,1 - 1, vorzugsweise 0,2 - 0,4; a = 8 - 12, vorzugsweise 10; b = 1 - 5 vorzugsweise 1 - 3; c = 0,1 - 0,6, vorzugsweise 0,2 - 0,4; d = 1 - 8, vorzugsweise 1 - 2.

Bei diesen Schichtsilikaten ist ein Teil der vierwertigen Si-lonen gegen dreiwertige Al-Ionen ausgetauscht. Die daraus resultierende negative Überschußladung in den Silikatschichten wird durch zwischengelagerte Na-Ionen ausgeglichen. An Stelle von Na⁺ können auch andere geeignete Kationen eingelagert sein. Bevorzugt ist Saponit SKS 20 (Hoechst Aktiengesellschaft).

Die erfindungsgemäßen thixotropen Suspensionskonzentrate enthalten in der Regel 0,1 - 25 Gew.-%, vorzugsweise 0,5 -15 Gew.-% übliche Hilfsmittel, die vorzugsweise aus der Reihe der Netz- und Dispergiermittel, Entschäumer, Verdicker, Konservierungsmittel und Frostschutzmittel ausgewählt werden.

Als zusätzliche Netz- und Dispergiermittel kommen beispielsweise ®Darvan Nr. 3, ®Vanisperse CB, ®Luviskol K 30, Reserve C, ®Forlanit P, ®Sokalan CP10, ®Maranil A, ®Genapol PF40, ®Genapol LRO, Tributylphenolpolyglykolether, wie die ®Sapogenat T-Marken (Hoechst), Nonylphenolpolyglykolether, wie die ®Arkopal N-Marken (Hoechst) oder Tristyrylphenolpolyglykolether-Derivate in Frage.

Geeignete Entschäumer sind beispielsweise solche auf Siliconbasis wie aus der ®Silcolapse-Reihe (Rhone Poulenc) oder Antischaummittel-Reihe von Wacker.

Verdickungsmittel können anorganischer oder organischer Natur sein; sie können auch kombiniert werden. Geeignet sind z. B. solche auf Aluminiumsilikat-, Xanthan-, Methylcellulose-, Polysaccharid-, Erdalkalisilikat-, Gelatine- und Polyvinylalkohol-Basis, wie beispielsweise ®Bentone EW, ®Veegum, ®Rhodopol 23 oder ®Kelzan S.

Wenn nötig, finden Konservierungsmittel, beispielsweise auf Formaldehyd-, Benzoesäure- und Triphenylzinn-Basis Verwendung.

Weiterhin können auch Frostschutzmittel, wie Harnstoff, Salze, Polyole (z. B. Glykol, Propylenglykol oder Glycerin) oder Zucker zugesetzt werden.

Zur Herstellung der erfindungsgemäßen Suspensionskonzentrate verrührt man die Komponenten mit Wasser, zerkleinert die erhaltene großteilige Suspension gegebenenfalls durch Vermahlen in einer Korund- oder Zahnscheibenmühle auf Feinheiten von etwa 200 *µ*m vor und mahlt das Produkt anschließend beispielsweise in Reibkugelmühlen oder Sandmühlen, bis die Partikel der Dispersion in Teilchengrößen von 0,01 bis unter 5 *µ*m, vorliegen. Die Teilchengrößen können mittels einer Scheibenzentrifuge oder durch Laser-Beugung bestimmt werden.

Die Erfindung betrifft daher auch die Verwendung von Saponiten als Hilfsmittel bei der Herstellung von Pflanzenschutzmittelsuspensionen durch Naßvermahlung der festen Bestandteile.

Die Verwendung der erfindungsgemäßen Suspensionskonzentrate im Pflanzenschutz erfolgt auf einfache Weise dadurch, daß man die Konzentrate gegebenenfalls mit der gewünschten Menge Wasser zu einer Spritzbrühe verdünnt, kurz verrührt und in wirksamer Menge auf die Schadinsekten, Akarina, Nematoden, Schadpilzen oder Schadpflanzen bzw. die von diesen befallenen Flächen oder Substrate oder auf Saatgut oder Pflanzen aufbringt.

Die nachfolgenden Beispiele dienen zur Erläuterung der Erfindung, ohne daß diese darauf beschränkt wäre.

Die erfindungsgemäßen thixotropen Suspensionskonzentrate wurden ausgehend von den folgenden handelsüblichen Rezepturen durch Saponit-Zusatz und Vermahlung in einer Netzsch-Mühle erhalten. Einzelheiten der Zusammensetzung sowie die physikalischen Eigenschaften der Konzentrate können der Tabelle I entnommen werden.

| Rezeptur 1: | |
|---|---|
| 39,0 % | Linuron a.i. |
| 10,0 % | Glycerin (99 %ig) |
| 2,0 % | Siliconentschäumer |
| 1,0 % | ®Darvan Nr. 3 |
| 0,1 % | Konservierungsmittel |
| 3,0 % | Ligninsulfonat CS |
| 0,5 % | Tributylphenol |
| 0,5 % | ®Luviskol K30 |
| ad 100 % | Wasser |

| Rezeptur 2: | |
|---|---|
| 23,02 % | Isoproturon a.i. |
| 5,64 % | loxynil a.i. |
| 15,98 % | Mecoprop-P-DMA Salz a.i. |
| 4,00 % | Reserve C |
| 2,00 % | ®Forlanit P |
| 1,00 % | Siliconentschäumer |
| 0,10 % | Konservierungsmittel |
| ad 100 % | Wasser |

| Rezeptur 3: | |
|---|---|
| 46,5 % | Isoproturon a.i. |
| 6,0 % | ®Reserve C |
| 3,0 % | ®Forlanit P |
| 1,0 % | Siliconentschäumer |
| 10,0 % | Glykol |
| ad 100 % | Wasser |

| Rezeptur 4: | |
|---|---|
| 39,78 % | Isoproturon a.i. |
| 1,52 % | Amidosulfuron a.i. |
| 10,00 % | ®Sokalan CP10 |
| 8,00 % | Glyzerin |
| 7,00 % | ®Maranil A |
| 1,00 % | ®Darvan Nr. 3 |
| 1,00 % | Siliconentschäumer |
| 0,10 % | Konservierungsmittel |
| ad 100 % | Wasser |

| Rezeptur 5: | |
|---|---|
| 31,90 % | Carbendazim a.i. |
| 7,50 % | Glykol |
| 2,25 % | Siliconentschäumer |
| 3,00 % | Ligninsulfonat CB |
| 2,25 % | ®Genapol PF 40 |
| 0,75 % | ®Genapol LRO |
| ad 100 % | Wasser |

| Rezeptur 6: | |
|---|---|
| 41,75 % | Carbendazim a.i. |
| 8,00 % | Glykol |
| 3,00 % | Siliconentschäumer |
| 4,00 % | Ligninsulfonat CB |
| 3,00 % | ®Genapol PF 40 |
| 1,00 % | ®Genapol LRO |
| ad 100 % | Wasser |

Anmerkungen zu den Rezepturen:
Der Entschäumer auf Siliconbasis ist das Handelsprodukt ® Silicolapse 5020 der Firma Rhone Poulenc;
Das Konservierungsmittel ist ein Handelsprodukt der Firma Riedel-de Haen;
®Darvan Nr. 3 der Firma R. T. Vanderbuilt Comp. Norwalk, CT 06855, USA-Datenblatt 07.01.81 ist ein Produkt auf Basis eines Na-Salzes von polymerisierten substituierten Alkylbenzolsulfonsäuren;
®Vanisperse CB der Firma Borregaard Industries Ltd., Sarpsborg, Norwegen ist ein Ligninsulfonat mit 0,17 Sulfonsäuregruppen je Phenylpropaneinheit, einem Gesamtschwefelgehalt von 2,4 % und einem pH-Wert von 8,8 (3 %ige Lösung);
®Luviskol K30 ist ein Polyacrylat der Firma BASF, Ludwigshafen.
Bei ®Sokalan CP10 handelt es sich um ein modifiziertes Na-Polyacrylat mit niedriger molarer Masse, das nach einem speziellen Polymerisationsverfahren hergestellt wird. (BASF Techn. Info TI/P 3039 d von 1988.)
®Maranil ist ein Dodecylbenzolsulfonat-Na-Salz von Henkel.
®Genapol LRO (Hoechst AG) ist ein Alkylpolyglykolethersulfat.
®Genapol PF40 (Hoechst AG) ist Polyethylen-Polypropylen-Blockcopolymer.
®Reserve C (Hoechst AG) ist ein Kondensationsprodukt aus Phenolen, Kresolen, Formaledhyd und Alkalisulfit.

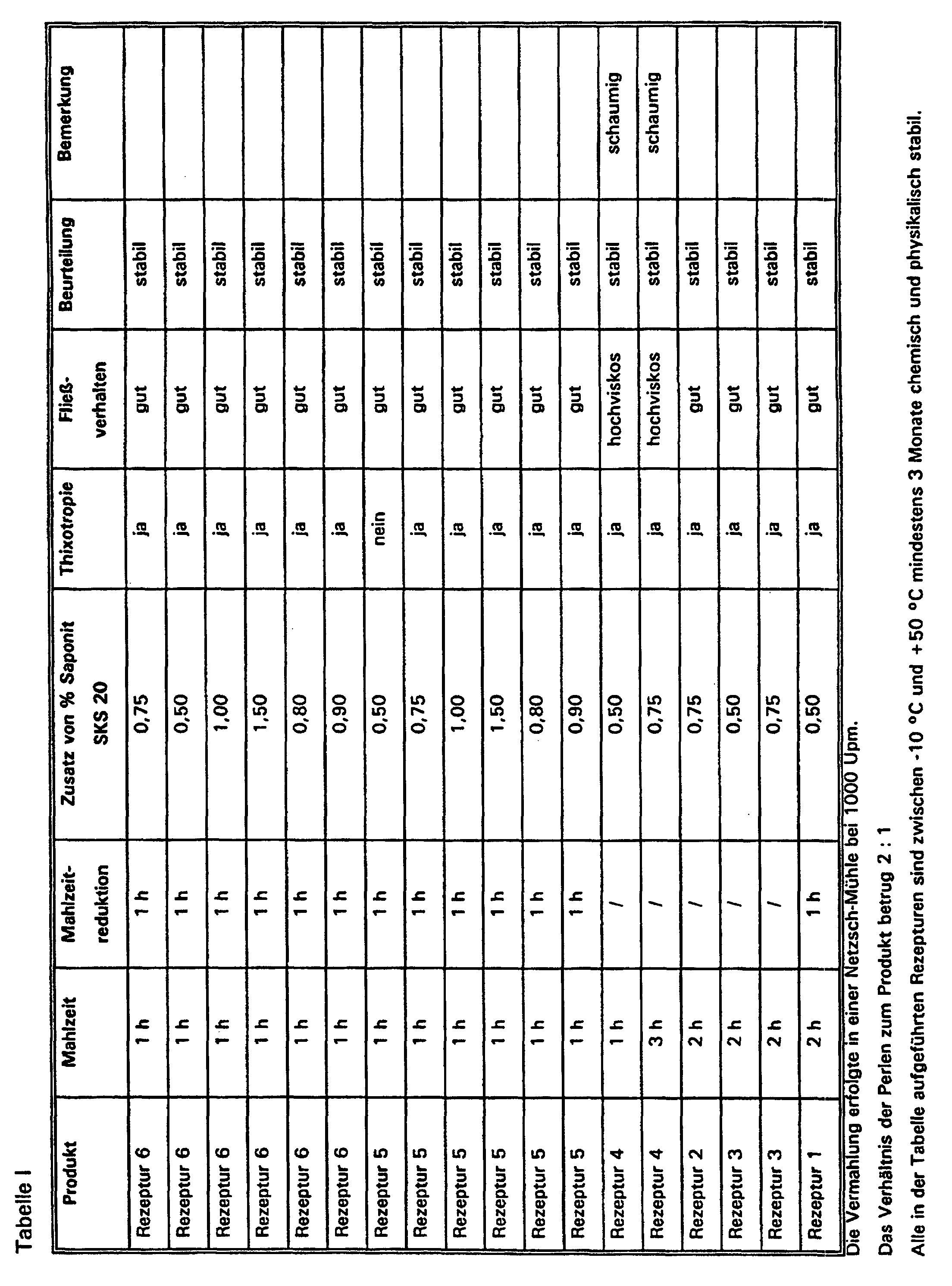

## Patentansprüche

1. Flüssiges Pflanzenschutzmittel in Form eines wäßrigen Suspensionskonzentrats, welches neben dem Wirkstoff oder Wirkstoffgemisch 0,01 - 6 Gew.-% an einem Saponit enthält, worin die Partikel in Teilchengrößen von 0,01 bis unter 5 *µ*m vorliegen.

2. Mittel gemäß Anspruch 1, bei welchem der Wirkstoff oder das Wirkstoffgemisch aus der Gruppe der Insektizide, Lockstoffe, Sterilantien, Akarizide, Nematizide, Fungizide, wachstumsregulierenden Stoffe oder Herbizide ausgewählt wird.

3. Mittel gemäß einem der Anspruch 1 oder 2, welches 1 - 70 Gew.-% Wirkstoff oder Wirkstoffgemisch und 0,01 - 6 Gew.-% Saponit enthält.

4. Mittel gemäß einem der Ansprüche 1 bis 3, welches 5 bis 50 Gew.-% Wirkstoff oder Wirkstoffgemisch und 0,1 bis 3 Gew.-% Saponit enthält.

5. Mittel gemäß einem der Ansprüche 1 bis 4, enthaltend 0,1 bis 25 Gew.-% übliche Hilfsmittel aus der Reihe der Netz- und Dispergiermittel, Entschäumer, Verdicker, Konservierungsmittel und Frostschutzmittel.

6. Verfahren zur Herstellung der nach einem der Ansprüche 1 bis 5 definierten Mittel, **dadurch gekennzeichnet, daß** man die Komponenten innig vermischt, die erhaltene Suspension gegebenenfalls zerkleinert oder mahlt.

7. Verfahren zur Bekämpfung von Schadinsekten, Akarina, Nematoden, Schadpilzen oder Schadpflanzen, **dadurch gekennzeichnet, daß** man auf diese bzw. die von diesen befallenen Flächen oder Substrate oder auf Saatgut oder Pflanzen eine wirksame Menge eines Mittels gemäß einem der Ansprüche 1 bis 5 aus wäßrigen Verdünnungen aufbringt.

8. Verwendung eines Mittels gemäß einem der Ansprüche 1 bis 5 zum Einsatz im Pflanzenschutz.

9. Verwendung von Saponiten als Hilfsmittel bei der Herstellung von Pflanzenschutzmittelsuspensionen durch Naßvermahlung der festen Bestandteile.

## Claims

1. A liquid plant protection agent in the form of an aqueous suspension concentrate which comprises 0.01-6% by weight of a saponite in which the particles are present in particle sizes of 0.01 to below 5µm, in addition to the active compound or active compound mixture.

2. An agent as claimed in claim 1, in which the active compound or the active compound mixture is chosen from the group consisting of insecticides, attractants, sterilizing agents, acaricides, nematicides, fungicides, growth-regulating substances or herbicides.

3. An agent as claimed in one of claims 1 or 2, which comprises 1-70% by weight of active compound or active compound mixture and 0.01-6% by weight of saponite.

4. An agent as claimed in one of claims 1 to 3, which comprises 5 to 50% by weight of active compound or active compound mixture and 0.1 to 3% by weight of saponite.

5. An agent as claimed in one of claims 1 to 4, comprising 0.1 to 25% by weight of customary auxiliaries from the series consisting of wetting and dispersing agents, defoamers, thickeners, preservatives and antifreezes.

6. A process for the preparation of an agent as defined in one of claims 1 to 5, which comprises mixing the components intimately and if appropriate comminuting or grinding the resulting suspension.

7. A method of combating harmful insects, Acarina, nematodes, harmful fungi or harmful plants, which comprises applying from an aqueous dilution an active amount of an agent as claimed in one of claims 1 to 5 to these organisms or the areas or substrates affected by them or to seed or plants.

8. The use of an agent as claimed in one of claims 1 to 5 for use in plant protection.

9. The use of a saponite as an auxiliary in the preparation of a plant protection agent suspension by wet grinding of the solid constituents.

## Revendications

1. Produit phytosanitaire liquide sous forme d'un concentré en suspension aqueuse qui, outre la matière active ou le mélange de matières actives, contient 0,01-6 % en poids d'une saponite, où les particules sont présentes selon une granulométrie de 0,01 àmoins de 5 µm.

2. Produit selon la revendication 1, dans lequel la matière active ou le mélange de matières actives est choisi dans l'ensemble comprenant les insecticides, les attractifs, les stérilisants, les acaricides, les nématicides, les fongicides, les régulateurs de croissance ou les herbicides.

3. Produit selon l'une des revendications 1 ou 2, qui contient de 1 à 70 % en poids de la matière active ou du mélange de matières actives, et de 0,01 à 6 % en poids de saponite.

4. Produit selon l'une des revendications 1 à 3, qui contient de 5 à 50 % en poids de la matière active ou du mélange de matières actives et de 0,1 à 3 % en poids de saponite.

5. Produit selon l'une des revendications 1 à 4, contenant de 0,1 à 25 % en poids d'adjuvants usuels choisis parmi les mouillants et dispersants, les antimousses, les épaississants, les conservateurs et les agents de protection contre le gel.

6. Procédé de préparation des produits définis dans l'une des revendications 1 à 5, **caractérisé en ce qu'**on mélange intimement les composants, on fragmente éventuellement la suspension obtenue, et on la broie.

7. Procédé de maîtrise des insectes nuisibles, des acariens, des nématodes, des champignons pathogènes ou des mauvaises herbes, **caractérisé en ce qu'**on applique sur ces derniers, ou sur les parcelles ou substrats qui en sont infestés, ou sur des semences ou plantes, une quantité efficace d'un produit selon l'une des revendications 1 à 5 en dilution aqueuse.

8. Utilisation d'un produit selon l'une des revendications 1 à 5 pour la protection des plantes.

9. Utilisation de saponites entant qu'adjuvants lors de la préparation de suspensions de produits phytosanitaires par broyage par voie humide des constituants solides.
